# EUROPÄISCHE PATENTSCHRIFT

(11) **EP 3 325 201 B1**
(45) Veröffentlichungstag und Bekanntmachung des Hinweises auf die Patenterteilung: **25.09.2019**
(21) Anmeldenummer: 16748068.0
(22) Anmeldetag: 13.07.2016
(51) Int. Cl.: B23C 5/10

(54) **EINSCHRAUBWERKZEUG UND WERKZEUGAUFNAHME MIT UNTERTEILTEM STÜTZBEREICH**
SCREWING TOOL AND TOOL HOLDER COMPRISING A SUBDIVIDED SUPPORT SECTION
OUTIL DE VISSAGE ET LOGEMENT D'OUTIL PRÉSENTANT UNE ZONE D'APPUI SUBDIVISÉE

(30) Priorität: 24.07.2015 DE 102015112079
(43) Veröffentlichungstag der Anmeldung: 30.05.2018
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Copsey, Timothy Graham
(86) Internationale Anmeldenummer: PCT/EP2016/066660
(87) Internationale Veröffentlichungsnummer: WO 2017/016877

(56) Entgegenhaltungen:
- WO-A1-91/14073
- WO-A1-2010/047158
- DE-A1-102012 100 976

## Beschreibung

Die Erfindung betrifft ein Einschraubwerkzeug nach dem Oberbegriff des Anspruchs 1, eine Werkzeugaufnahme nach dem Oberbegriff des Anspruchs 11 sowie eine Werkzeuganordnung.

Aus der WO 2010/047158 A1 ist ein gattungsgemäßes Einschraubwerkzeug bekannt, das einen Werkzeugkopf und einen Werkzeugschaft mit einem Außengewinde enthält. Zwischen dem Werkzeugkopf und dem Außengewinde sind ein erster Abstützbereich und zwischen dem Außengewinde und einem freien Ende des Werkzeugschafts ein zweiter Abstützbereich vorgesehen. Der zweite Abstützbereich weist im Umfangsrichtung voneinander beabstandete, radial nach außen vorstehende, kraterförmige Erhebungen auf.

In der WO 91/14073 A1 ist ein System zur Verbindung von Röhren offenbart. Um ein unbeabsichtigtes Lösen zweier miteinander verbundener Röhren zu verhindern, wird hier ein Kunststoffring eingesetzt.

Aufgabe der Erfindung ist es, ein Einschraubwerkzeug, eine Werkzeugaufnahme und eine Werkzeuganordnung zu schaffen, welche eine sichere Montage ermöglichen.

Diese Aufgabe wird durch ein Einschraubwerkzeug mit den Merkmalen des Anspruchs 1, eine Werkzeugaufnahme mit den Merkmalen des Anspruchs 11 und eine Werkzeuganordnung mit den Merkmalen des Anspruchs 23 gelöst. Vorteilhafte Ausgestaltungen der Erfindung sind in den Unteransprüchen angegeben.

Das erfindungsgemäße Einschraubwerkzeug zeichnet sich dadurch aus, dass der zweite Abstützbereich in Umfangsrichtung voneinander beabstandete, radial nach außen vorstehende Stützelemente mit jeweils einer zylinderabschnittsförmigen oder balligen Anlagefläche aufweist. Durch diese Stützelemente werden Reibungsverluste durch geringere Kontaktflächen verringert, wodurch sich auch das bei der Montage des Einschraubwerkzeugs in der Werkzeugaufnahme benötigte, aus dem gegenseitigen Kontakt im zweiten Abstützbereich resultierende Drehmoment verringert. Hierdurch entspricht das insgesamt aufzubringende Moment noch viel eher dem für die Gewindeverbindung errechnetem optimalen Drehmoment, so dass eine Überlastung des Einschraubwerkzeugs verhindert werden kann. Zudem erhöht sich durch die voneinander beabstandeten Stützelemente die Vibrationsdämpfung durch die höhere Elastizität der einzeln nach außen vorstehenden Stützelemente. Auch lassen sich durch die Größe und Anzahl der Kontaktflächen die Dämpfungseigenschaften gezielt beeinflussen.

In einer vorteilhaften Ausführungsform sind die Stützelemente in Umfangsrichtung gleichmäßig voneinander beabstandet. Es ist jedoch auch möglich, die Stützelemente ungleichmäßig, aber punktsymmetrisch zur Mittelachse des Einschraubwerkzeugs zu verteilen.

Um eine besonders gute Stützwirkung zu erzielen, können die Stützelemente als in Axialrichtung des Einschraubwerkzeugs verlaufende Stege ausgebildet sein.

Die zylinderabschnittsförmige Anlagefläche kann bevorzugt koaxial zu einer Längsachse des Einschraubwerkzeugs ausgebildet ist. Durch die zylinderabschnittsförmigen Anlageflächen wird ein vollflächiger Kontakt zwischen den Stützelementen und der Werkzeugaufnahme und damit eine stabile Zentrierung ermöglicht. Bei den balligen bzw. kugelabschnittsförmigen Anlageflächen wird die Hüllfläche durch eine Kugel gebildet, deren Mittelpunkt entweder auf der Mittelachse des Einschraubwerkzeugs oder radial entfernt hiervon angeordnet ist. Damit ergibt sich dann entsprechend ein Punkt- oder Linienkontakt zwischen den Stützelementen und der Werkzeugaufnahme mit entsprechend reduzierten Reibungskräften.

Um ein Einführen der Stützelemente des Einschraubwerkzeugs in eine entsprechenden Lagerbereich der Werkzeugaufnahme zu erleichtern und eine gleichmäßige elastische Verformung der Stützelemente zu erreichen, können die Stützelemente auf einer dem freien Ende des Werkzeugschafts zugewandten Seite eine Einführfase aufweisen.

Zur Stabilisierung der Stützelemente gerade bei der Montage des Einschraubwerkzeugs in der Werkzeugaufnahme können Übergänge zwischen den Stützelementen und in Umfangsrichtung zwischen den Stützelementen angeordneten Aussparungen mit geringeren Außenabmessungen verrundet sein.

Um eine besonders stabile und zentrierende Lagerung des Einschraubwerkzeugs in der Werkzeugaufnahme zu erreichen, kann der erste Abstützbereich durch zwei konische Anlageflächen mit unterschiedlichen Kegelwinkeln gebildet sein, welche bevorzugt aneinander anliegen. Eine besonders gute Zentrierung kann dadurch erreicht werden, dass sich sowohl die erste konische Anlagefläche als auch die zweite konische Anlagefläche in Einschraubrichtung des Einschraubwerkzeugs verringern. Gerade bei derartigen doppelkonischen Lagerungen ist aufgrund des Fehlens einer zur Einschraubkraft rechtwinkligen Anschlagfläche das Einschraub-Drehmoment besonders präzise einzustellen, da mit zunehmendem Eindrehen des Einschraubwerkzeugs es nur zu einer Verformung der Werkzeugaufnahme kommt.

Es wird außerdem eine Werkzeugaufnahme für ein Einschraubwerkzeug beansprucht. Diese zeichnet sich dadurch aus, dass der zweite Auflagebereich voneinander beabstandete, radial nach innen vorstehende Auflageelemente aufweist. Durch diese Auflageelemente werden Reibungsverluste durch geringere Kontaktflächen verringert, wodurch sich auch das bei der Montage eines Einschraubwerkzeugs in die Werkzeugaufnahme benötigte, aus dem gegenseitigen Kontakt im zweiten Abstützbereich resultierende Drehmoment verringert. Hierdurch entspricht das insgesamt aufzubringende Moment noch viel eher dem für die Gewindeverbindung errechnetem optimalen Drehmoment, so dass eine Überlastung des Einschraubwerkzeugs verhindert werden kann. Zudem erhöht sich durch die voneinander beabstandeten Auflageelemente die Vibrationsdämpfung durch die höhere Elastizität der einzeln nach außen vorstehenden Auflageelemente. Auch lassen sich durch die Größe und Anzahl der Kontaktflächen die Dämpfungseigenschaften gezielt beeinflussen.

In einer vorteilhaften Ausführungsform sind die Auflageelemente in Umfangsrichtung gleichmäßig voneinander beabstandet. Es ist jedoch auch möglich, die Auflageelemente ungleichmäßig, aber punktsymmetrisch zur Mittelachse der Werkzeugaufnahme zu verteilen.

Um eine besonders gute Stützwirkung zu erzielen, können die Auflageelemente als in Axialrichtung der Werkzeugaufnahme verlaufende Stege ausgebildet sein.

Im radial innersten Bereich können die Auflageelemente zudem eine zylinderabschnittsförmige Auflagefläche aufweisen, welche bevorzugt koaxial zu einer Längsachse der Werkzeugaufnahme ausgebildet ist. Durch die Zylinderabschnittsförmigen Auflageflächen wird ein vollflächiger Kontakt zwischen den Auflageelementen und dem Einschraubwerkzeug und damit eine stabile Zentrierung des Einschraubwerkzeugs ermöglicht. Um die Reibung zwischen den Auflageelementen und dem Einschraubwerkzeug weiter zu reduzieren, können an den Auflageelementen jedoch auch ballige bzw. kugelabschnittsförmige oder rotationssymmetrische im Querschnitt gekrümmte Auflageflächen vorgesehen sein. Damit ergibt sich dann entsprechend ein Punkt- oder Linienkontakt zwischen den Auflageelementen und dem Einschraubwerkzeug mit entsprechend reduzierten Reibungskräften.

Um ein Einführen eines beispielsweise zylindrischen Lagerbereichs an dem Einschraubwerkzeugs in den zweiten Auflagebereich zu erleichtern und eine gleichmäßige elastische Verformung der Auflageelemente zu erreichen, können die Auflageelemente auf einer dem Innengewinde der Werkzeugaufnahme zugewandten Seite eine Zentrierfase aufweisen.

Zur Stabilisierung der Auflageelemente gerade bei der Montage des Einschraubwerkzeugs in der Werkzeugaufnahme können Übergänge zwischen den Auflageelementen und in Umfangsrichtung zwischen den Auflageelementen angeordneten Ausnehmungen mit geringeren Außenabmessungen verrundet sein.

Um eine besonders stabile und zentrierende Lagerung des Einschraubwerkzeugs in der Werkzeugaufnahme zu erreichen, kann der erste Auflagebereich durch zwei konische Auflageflächen mit unterschiedlichen Kegelwinkeln gebildet sein, welche bevorzugt aneinander anliegen. Eine besonders gute Zentrierung kann dadurch erreicht werden, dass sich sowohl die erste konische Auflagefläche als auch die zweite konische Auflagefläche in Einschraubrichtung des Einschraubwerkzeugs verringern. Gerade bei derartigen doppelkonischen Lagerungen ist aufgrund des Fehlens einer zur Einschraubkraft rechtwinkligen Anschlagfläche das Einschraub-Drehmoment besonders präzise einzustellen, da mit zunehmendem Eindrehen des Einschraubwerkzeugs es nur zu einer Verformung der Werkzeugaufnahme kommt.

Des Weiteren wird auch eine Werkzeuganordnung beansprucht, welche dadurch gekennzeichnet ist, dass das Einschraubwerkzeug und/oder die Werkzeugaufnahme wie beschrieben ausgebildet sind.

Besonders bevorzugt kann sowohl das Einschraubwerkzeug als auch die Werkzeugaufnahme wie beschrieben ausgebildet sein, wobei sich die Teilung der in Umfangsrichtung voneinander beabstandeten, radial nach außen vorstehenden Stützelemente des zweiten Abstützbereichs des Einschraubwerkzeugs von der Teilung der voneinander beabstandeten, radial nach innen vorstehenden Auflageelemente des zweiten Auflagebereichs der Werkzeugaufnahme unterscheiden. Hierdurch wird erreicht, dass unabhängig von der Winkellage zwischen dem Einschraubwerkzeug und der Werkzeugaufnahme im eingeschraubten Zustand zumindest ein Teil der Stützelemente und Auflageelemente aneinander anliegen. Es ist jedoch auch möglich, eine gleiche Teilung der Stützelemente bzw. Auflageelemente vorzusehen, wobei diese dann so an der Werkzeugaufnahme und dem Einschraubwerkzeug anzuordnen sind, dass im eingeschraubten Zustand sich die Stützelemente und die Auflageelemente radial gegenüberliegen und in Kontakt stehen.

Die Anlageflächen weisen vorzugsweise eine gleiche Höhe auf. Bei entsprechener gegenseitiger Anpassung der gegenüberliegenden Flächen können diese aber auch unterschiedlich hoch sein.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: eine perspektivische Darstellung eines Einschraubwerkzeugs mit einem Werkzeugkopf und einem Werkzeugschaft;
- **Fig. 2**: eine Detailansicht eines Abstützbereichs des Einschraubwerkzeugs aus Figur 1;
- **Fig. 3**: eine Schnittdarstellung eines vorderen Bereichs einer Werkzeugaufnahme mit einer Aufnahmeöffnung für ein Einschraubwerkzeug;
- **Fig. 4**: eine perspektivische Ansicht der Aufnahmeöffnung der Werkzeugaufnahme aus Figur 3 und
- **Fig. 5**: eine Detailansicht eines Auflagebereichs der Werkzeugaufnahme aus Figur 4.

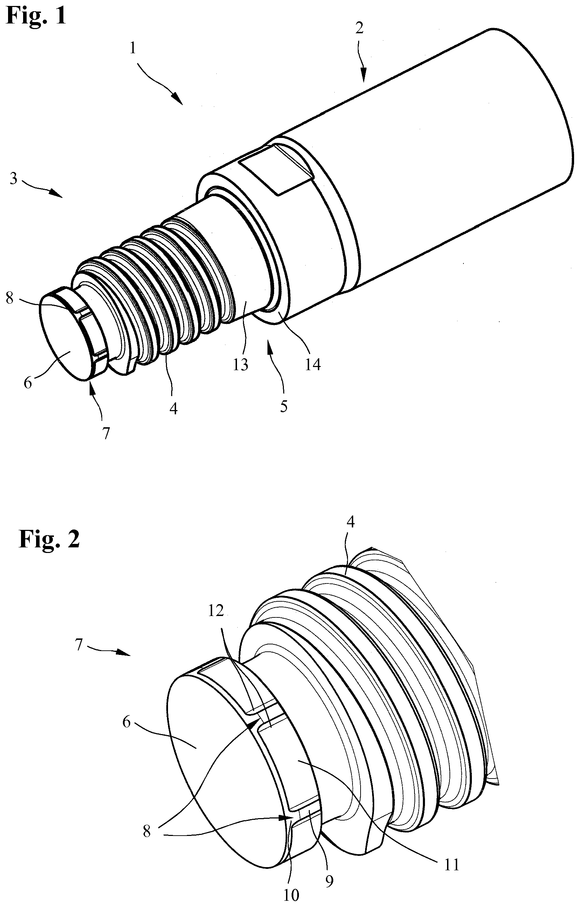

In Figur 1 ist ein Einschraubwerkzeug 1 mit einem Werkzeugkopf 2 und einem Werkzeugschaft 3 gezeigt. An dem Werkzeugkopf 2 sind nicht dargestellte Schneiden zur spanabhebenden Bearbeitung eines Werkstücks angeordnet. Der Werkzeugschaft 3 weist ein Außengewinde 4, ein zwischen dem Werkzeugkopf 2 und dem Außengewinde 4 angeordneten ersten Abstützbereich 5 und einen zwischen einem freien Ende 6 des Werkzeugschafts 3 und dem Außengewinde 4 angeordneten zweiten Abstützbereich 7 auf. Das freie Ende 6 wird durch eine Stirnseite des Werkzeugschafts 3 gebildet.

Der zweite Abstützbereich 7 weist in Umfangsrichtung voneinander beabstandete und radial nach außen vorstehende Stützelemente 8 auf. Die Ausbildung dieser Stützelemente 8 wird in Bezug auf Figur 2 näher beschrieben.

In Figur 2 ist der zweite Abstützbereich 7 des Einschraubwerkzeugs 1 von Figur 1 im Detail dargestellt. Wie dort zu erkennen ist, sind die Stützelemente 8 als in Axialrichtung des Einschraubwerkzeugs 1 verlaufende Stege ausgebildet und gleichmäßig voneinander beabstandet. Im radial äußersten Bereich weisen die Stützelemente 8 jeweils zylinderabschnittsförmige Anlagefläche 9 auf, welche zur zentrierenden und dämpfenden Anlage an einer nicht dargestellten Werkzeugaufnahme dienen. Die zylinderabschnittsförmigen Anlageflächen 9 sind koaxial zu einer Längsachse des Einschraubwerkzeugs 1 ausgebildet, so dass die Anlageflächen 9 zusammen eine gemeinsame, zur Längsachse des Einschraubwerkzeugs 1 konzentrische zylindrische Hüllfläche aufweisen.

Um die Einführung des Einschraubwerkzeugs 1 in eine entsprechende Lagerstelle in einer Werkzeugaufnahme zu erleichtern und eine gleichmäßige elastische radial nach innen gerichtete Verformung der Stützelemente 8 zu erreichen, weisen die Stützelemente 8 auf einer dem freien Ende 6 zugewandten Seite eine Einführfase 10 auf.

In Umfangsrichtung zwischen den Stützelementen 8 sind Aussparungen 11 vorgesehen, welche gegenüber den Stützelementen 8 radial geringere Außenabmessungen aufweisen, das heißt, die Aussparungen 11 sind gegenüber den Stützelemeten 8 radial nach innen versetzt. Durch diese Aussparungen 11 wird gewährleistet, dass der Kontakt zwischen dem Einschraubwerkzeug 1 und der in Figur 2 nicht dargestellten Werkzeugaufnahme 15 nicht vollumfänglich, sondern nur abschnittsweise im Bereich der Stützelemente 8 vorliegt, so dass durch diesen veringerten Flächenkontakt die Reibung reduziert wird.

Die Übergänge 12 zwischen den Stützelementen 8 und den Aussparungen 11 sind verrundet, um eine besonders gute Krafteinleitung insbesondere von Umfangskräften auf die Stützelemente 8in den Werkzeugschaft 3 zu erreichen.

In Figur 1 ist zudem gezeigt, dass der erste Abstützbereich 5 durch zwei konische Anlageflächen 13, 14 gebildet wird, welche unmittelbar aneinander angrenzen. Die Durchmesser der ersten konischen Anlagefläche 13 und der zweiten konischen Anlagefläche 14 verjüngen sich dabei in Einschraubrichtung des Einschraubwerkzeugs 1. Hierzu ist näheres in DE 10 2012 100 976 A1 ausgeführt, auf deren Inhalt hiermit vollumfänglich Bezug genommen wird.

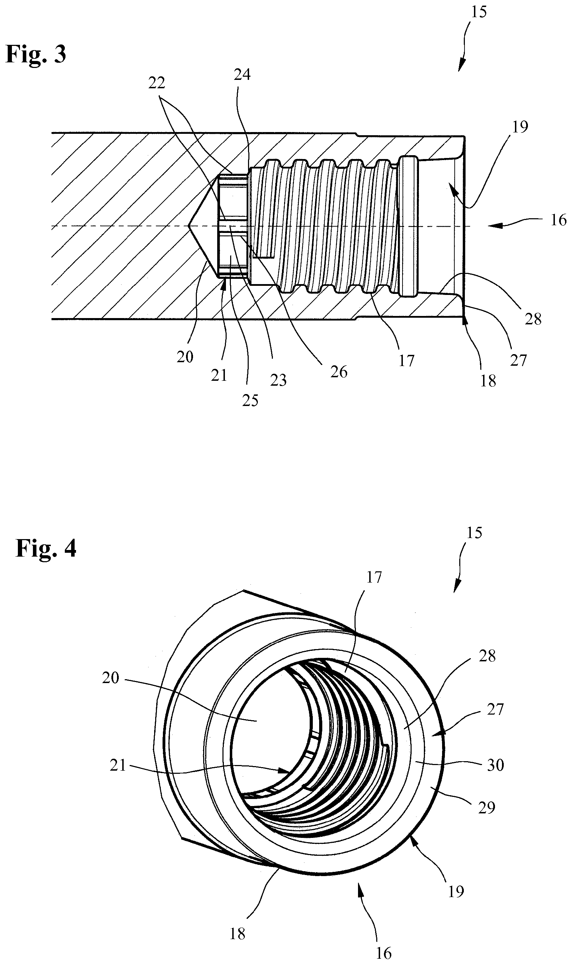

In Figur 3 ist eine Schnittdarstellung eines vorderen Bereichs einer Werkzeugaufnahme 15 gezeigt, welches zur Aufnahme des beschriebenen Einschraubwerkzeug 1 ausgebildet ist. Die Werkzeugaufnahme 15 weist eine Aufnahmeöffnung 16 mit einem Innengewinde 17 auf. Zwischen einer vorderen, dem in Figur 3 nicht dargestellten Einschaubwerkzeug 1 zugewandten Stirnseite 18 der Werkzeugaufnahme 15 und dem Innengewinde 17 ist ein erster Auflagebereich 19 angeordnet. An einem inneren Ende 20 der Aufnahmeöffnung 16 ist zudem ein zweiter, innerer Auflagebereich 21 ausgebildet, welcher voneinander beabstandete, radial nach innen vorstehende Auflageelemente 22 aufweist.

Wie aus Figur 3 zu entnehmen ist, sind die Auflageelemente 22 gleichmäßig in Umfangsrichtung voneinander beabstandet und als in Axialrichtung der Werkzeugaufnahme 15 verlaufende Stege ausgebildet. In einem radial innersten Bereich weisen die Auflageelemente 22 jeweils eine zylinderabschnittsförmige Auflagefläche 23 auf, welche sich koaxial zu einer Längsachse der Werkzeugaufnahme 15 erstreckt und zur zentrierenden und dämpfenden Anlage an dem nicht dargestellten Einschraubwerkzeug 1 dient.

Um ein einfaches Einführen des Einschraubwerkzeugs 1 und ein gleichmäßiges elastisches Verformen der Auflageelemente 22 zu erreichen, weisen die Auflageelemente 22 auf einer dem Innengewinde 17 zugewandten Seite eine Zentrierfase 24 auf. Zudem sind in Umfangsrichtung zwischen den Auflageelementen 22 Ausnehmungen 25 angeordnet, welche gegenüber den Auflageelementen 22 größere Außenabmessungen aufweisen, das heißt, die Ausnehmungen 25 sind gegenüber den Auflageelementen 22 radial nach außen versetzt. Durch diese Ausnehmungen 25 wird gewährleistet, dass der Kontakt zwischen der Werkzeugaufnahme 15 und dem in Figur 3 nicht dargestellten Einschraubwerkzeug 1 nicht vollumfänglich, sondern nur abschnittsweise im Bereich der Auflageelemente 22 vorliegt, so dass durch diesen verringerten Flächenkontakt die Reibung reduziert wird.

Die Übergänge 26 zwischen den Auflageelementen 22 und den Ausnehmungen 25 sind verrundet, um eine besonders gute Krafteinleitung insbesondere von Umfangskräften auf die Auslageelemente 22 in die Werkzeugaufnahme 15 zu erreichen.

Der erste Auflagebereich 19 wird durch zwei konische Auflageflächen 27, 28 mit unterschiedlichen Kegelwinkeln gebildet, welche unmittelbar aneinander angrenzen. Die Durchmesser der ersten konischen Auflagefläche 27 und der zweiten konischen Auflagefläche 28 verjüngen sich dabei in Einschraubrichtung des nicht dargestellten Einschraubwerkzeugs 1 in die Werkzeugaufnahme 15, also in Figur 3 nach links. Hierzu ist näheres in DE 10 2012 100 976 A1 ausgeführt, auf deren Inhalt hiermit vollumfänglich Bezug genommen wird.

In Figur 4 ist eine perspektivische Ansicht der Aufnahmeöffnung 16 der Werkzeugaufnahme 15 gezeigt. Wir dort gut zu erkennen ist, ist der erste Auflagebereich 19 an der vorderen Stirnseite 18 der Werkzeugaufnahme 15 angeordnet und umfasst die erste konische Auflagefläche 27 und die zweite konische Auflagefläche 28. Die erste konische Auflagefläche 27 weist neben einem kegelförmigen Abschnitt 29 an dem der zweiten konischen Auflagefläche 28 zugewandten Ende eine Verrundung 30 als Übergang zu der zweiten konischen Auflagefläche 28 auf. Die vordere Stirnseite 18 wird durch eine umlaufende Kante gebildet.

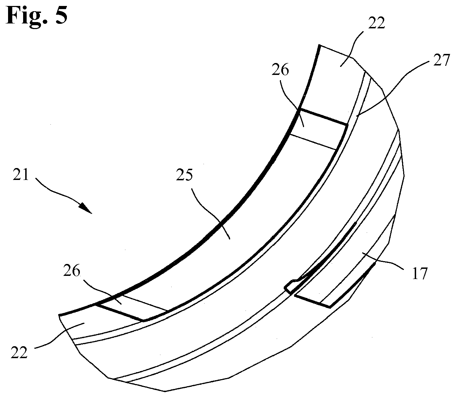

Im inneren Ende 20 der Aufnahmeöffnung 16 nach dem Innengewinde 17 ist der zweite Auflagebereich 21 angeordnet. Dieser ist in Figur 5 in einer Detailansicht gezeigt. Wir dort zu erkennen ist, weist der zweite Auflagebereich 21 die nach innen vorstehenden Auflageelemente 22 auf, an welche sich zu beiden Seiten in Umfangsrichtung die Übergänge 26 und dann die Ausnehmungen 25 anschließen. An der dem Innengewinde 17 zugewandten Seite der Auflageelemente 22 ist zudem die Zentrierfase 24 ausgebildet.

Das in den Figuren 1 und 2 gezeigte Einschraubwerkzeug 1 bildet zusammen mit der in den Figuren 3 bis 5 gezeigten Werkzeugaufnahme 15 eine Werkzeuganordnung, das heißt, dass das Außengewinde 4 und das Innengewinde 17, der erste Abstützbereich 5 mit den konischen Anlageflächen 13, 14 und der erste Auflagebereich 19 mit den konischen Auflageflächen 27, 28 sowie der zweite Abstützbereich 7 mit den Stützelementen 8 und der zweite Auflagebereich 21 mit den Auflageelementen 22 zur gegenseitigen Anlage ausgebildet sind. Die Teilung der in Umfangsrichtung voneinander gleichmäßig beabstandeten, radial nach außen vorstehenden Stützelemente 8, also die Anzahl der Stützelemente über den Vollkreis, kann dabei von der Teilung der voneinander gleichmäßig beabstandeten, radial nach innen vorstehenden Auflageelemente 22 unterscheiden, um eine gegenseitige Anlage zu gewährleisten.

Es ist jedoch auch möglich, nur bei dem Einschraubwerkzeug 1 oder der Werkzeugaufnahme 15 den zweiten Abstützbereich 7 bzw. den zweiten Auflagebereich 21 wie beschrieben auszubilden und den gegenüberliegenden Bereich der Werkzeugaufnahme 15 bzw. des Einschraubwerkzeugs 1 entsprechend zylindrisch oder konische rotationssymmetrisch auszubilden.

### Bezugszeichenliste

- 1: Einschraubwerkzeug
- 2: Werkzeugkopf
- 3: Werkzeugschaft
- 4: Außengewinde
- 5: Erster Abstützbereich
- 6: Freies Ende des Werkzeugschafts
- 7: Zweiter Abstützbereich
- 8: Stützelemente
- 9: Anlagefläche
- 10: Einführfase
- 11: Aussparungen
- 12: Übergang zwischen Stützelement und Aussparung
- 13: Erste konische Anlagefläche
- 14: Zweite konische Anlagefläche
- 15: Werkzeugaufnahme
- 16: Aufnahmeöffnung
- 17: Innengewinde
- 18: Vordere Stirnseite der Werkzeugaufnahme
- 19: Erster Auflagebereich
- 20: Inneres Ende der Aufnahmeöffnung
- 21: Zweiter Auflagebereich
- 22: Auflageelemente
- 23: Zylinderabschnittsförmige Auflagefläche
- 24: Zentrierfase
- 25: Ausnehmungen
- 26: Übergang zwischen Auflageelement und Ausnehmung
- 27: Erste konische Auflagefläche
- 28: Zweite konische Auflagefläche
- 29: Kegelförmiger Abschnitt 29
- 30: Verrundung

## Patentansprüche

1. Einschraubwerkzeug (1), das einen Werkzeugkopf (2) und einen Werkzeugschaft (3) mit einem Außengewinde (4), einem zwischen dem Werkzeugkopf (2) und dem Außengewinde (4) angeordneten ersten Abstützbereich (5) und einem zwischen dem Außengewinde (4) und einem freien Ende (6) des Werkzeugschafts (3) angeordneten zweiten Abstützbereich (7) enthält, wobei der zweite Abstützbereich (7) in Umfangsrichtung voneinander beabstandete, radial nach außen vorstehende Stützelemente (8) aufweist, **dadurch gekennzeichnet, dass** die Stützelemente (8) jeweils eine zylinderabschnittsförmige oder eine ballige Anlagefläche (9) aufweisen.

2. Einschraubwerkzeug (1) nach Anspruch 1, **dadurch gekennzeichnet, dass** die Stützelemente (8) gleichmäßig voneinander beabstandet sind.

3. Einschraubwerkzeug (1) nach Anspruch 1, **dadurch gekennzeichnet, dass** die Stützelemente (8) ungleichmäßig voneinander beabstandet sind.

4. Einschraubwerkzeug (1) nach einem der Ansprüche 1 bis 3, **dadurch gekennzeichnet, dass** die Stützelemente (8) als in Axialrichtung des Einschraubwerkzeugs (1) verlaufende Stege ausgebildet sind.

5. Einschraubwerkzeug (1) nach Anspruch 1, **dadurch gekennzeichnet, dass** die zylinderabschnittsförmige Anlagefläche (9) koaxial zu einer Längsachse des Einschraubwerkzeugs (1) ausgebildet ist.

6. Einschraubwerkzeug (1) nach einem der vorhergehenden Ansprüche, **dadurch gekennzeichnet, dass** die Stützelemente (8) auf einer dem freien Ende (6) zugewandten Seite eine Einführfase (10) aufweisen.

7. Einschraubwerkzeug (1) nach einem der vorhergehenden Ansprüche, **dadurch gekennzeichnet, dass** in Umfangsrichtung zwischen den Stützelementen (8) Aussparungen (11) mit gegenüber den Stützelementen (8) geringeren Außenabmessungen angeordnet sind und Übergänge (12) zwischen den Stützelementen (8) und den Aussparungen (11) verrundet sind.

8. Einschraubwerkzeug (1) nach einem der vorhergehenden Ansprüche, **dadurch gekennzeichnet, dass** der erste Abstützbereich (5) durch zwei konische Anlageflächen (13; 14) mit unterschiedlichen Kegelwinkeln gebildet wird.

9. Einschraubwerkzeug (1) nach Anspruch 8, **dadurch gekennzeichnet, dass** die beiden konischen Anlageflächen (13; 14) unmittelbar aneinander angrenzen.

10. Einschraubwerkzeug (1) nach Anspruch 8 oder 9, **dadurch gekennzeichnet, dass** sich die Durchmesser der ersten konischen Anlagefläche (13) und der zweiten konischen Anlagefläche (14) in Einschraubrichtung des Einschraubwerkzeugs (1) verringern.

11. Werkzeugaufnahme (15) für ein Einschraubwerkzeug (1), die eine Aufnahmeöffnung (16) mit einem Innengewinde (17), einen zwischen einer vorderen Stirnseite (18) der Werkzeugaufnahme (15) und dem Innengewinde (17) angeordneten ersten Auflagebereich (19) und einen inneren zweiten Auflagebereich (21) nach dem Innengewinde (17) enthält, **dadurch gekennzeichnet, dass** der zweite Auflagebereich (21) voneinander beabstandete, radial nach innen vorstehende Auflageelemente (22) aufweist.

12. Werkzeugaufnahme (15) nach Anspruch 11, **dadurch gekennzeichnet, dass** die Auflageelemente (22) gleichmäßig voneinander beabstandet sind.

13. Werkzeugaufnahme (15) nach Anspruch 11, **dadurch gekennzeichnet, dass** die Auflageelemente (22) ungleichmäßig voneinander beabstandet sind.

14. Werkzeugaufnahme (15) nach einem der Ansprüche 11 bis 13, **dadurch gekennzeichnet, dass** die Auflageelemente (22) als in Axialrichtung der Werkzeugaufnahme (15) verlaufende Stege ausgebildet sind.

15. Werkzeugaufnahme (15) nach einem der Ansprüche 11 bis 14, **dadurch gekennzeichnet, dass** die Auflageelemente (22) jeweils eine zylinderabschnittsförmige Auflagefläche (23) aufweisen.

16. Werkzeugaufnahme (15) nach Anspruch 15, **dadurch gekennzeichnet, dass** die zylinderabschnittsförmigen Auflageflächen (23) koaxial zu einer Längsachse der Werkzeugaufnahme (15) ausgebildet sind.

17. Werkzeugaufnahme (15) nach einem der Ansprüche 11 bis 14, **dadurch gekennzeichnet, dass** die Auflageelemente (22) eine ballige Auflagefläche (23) aufweisen.

18. Werkzeugaufnahme (15) nach einem der Ansprüche 11 bis 17, **dadurch gekennzeichnet, dass** die Auflageelemente (22) auf einer dem Innengewinde (17) zugewandten Seite eine Zentrierfase (24) aufweisen.

19. Werkzeugaufnahme (15) nach einem der Ansprüche 11 bis 18, **dadurch gekennzeichnet, dass** in Umfangsrichtung zwischen den Auflageelementen (22) Ausnehmungen (25) mit gegenüber den Auflageelementen (22) größeren Außenabmessungen angeordnet sind und die Übergänge (26) zwischen den Auflageelementen (22) und den Ausnehmungen (25) verrundet sind.

20. Werkzeugaufnahme (15) nach einem der Ansprüche 11 bis 19, **dadurch gekennzeichnet, dass** der erste Auflagebereich (19) durch zwei konische Auflageflächen (27; 28) mit unterschiedlichen Kegelwinkeln gebildet wird.

21. Werkzeugaufnahme (15) nach Anspruch 20, **dadurch gekennzeichnet, dass** die beiden konischen Auflageflächen (27; 28) unmittelbar aneinander angrenzen.

22. Werkzeugaufnahme (15) nach Anspruch 20 oder 21, **dadurch gekennzeichnet, dass** sich die Durchmesser der ersten konischen Auflagefläche (27) und der zweiten konischen Auflagefläche (28) in Einschraubrichtung des Einschraubwerkzeugs (1) verringern.

23. Werkzeuganordnung umfassend eine Werkzeugaufnahme (15) und ein Einschraubwerkzeug (1), **dadurch gekennzeichnet, dass** das Einschraubwerkzeug (1) nach einem der Ansprüche 1 bis 10 und/oder die Werkzeugaufnahme (15) nach einem der Ansprüche 11 bis 22 ausgebildet ist.

24. Werkzeuganordnung nach Anspruch 23, **dadurch gekennzeichnet, dass** das Einschraubwerkzeug (1) nach einem der Ansprüche 1 bis 10 und die Werkzeugaufnahme (15) nach einem der Ansprüche 11 bis 22 ausgebildet ist, wobei sich die Teilung der in Umfangsrichtung voneinander beabstandeten, radial nach außen vorstehenden Stützelemente (8) des zweiten Abstützbereichs (7) des Einschraubwerkzeugs (1) von der Teilung der voneinander beabstandeten, radial nach innen vorstehenden Auflageelemente (22) des zweiten Auflagebereichs (21) der Werkzeugaufnahme (15) unterscheidet.

## Claims

1. Screw-in tool (1) that contains a tool head (2) and a tool shank (3) with an external thread (4), a first supporting region (5), arranged between the tool head (2) and the external thread (4), and a second supporting region (7), arranged between the external thread (4) and a free end (6) of the tool shank (3), wherein the second supporting region (7) has support elements (8) that are spaced apart from one another in the circumferential direction and protrude radially outwards, **characterized in that** the support elements (8) each have a cylinder-segment-shaped or crowned contact surface (9).

2. Screw-in tool (1) according to Claim 1, **characterized in that** the support elements (8) are spaced apart regularly from one another.

3. Screw-in tool (1) according to Claim 1, **characterized in that** the support elements (8) are spaced apart irregularly from one another.

4. Screw-in tool (1) according to one of Claims 1 to 3, **characterized in that** the support elements (8) are in the form of webs that extend in the axial direction of the screw-in tool (1).

5. Screw-in tool (1) according to Claim 1, **characterized in that** the cylinder-segment-shaped contact surface (9) is formed coaxially with a longitudinal axis of the screw-in tool (1).

6. Screw-in tool (1) according to one of the preceding claims, **characterized in that** the support elements (8) have an insertion chamfer on a side facing the free end (6).

7. Screw-in tool (1) according to one of the preceding claims, **characterized in that** cutouts (11) with external dimensions smaller than the support elements (8) are arranged in the circumferential direction between the support elements (8), and transitions (12) between the support elements (8) and the cutouts (11) are rounded.

8. Screw-in tool (1) according to one of the preceding claims, **characterized in that** the first supporting region (5) is formed by two conical contact surfaces (13; 14) with different cone angles.

9. Screw-in tool (1) according to Claim 8, **characterized in that** the two conical contact surfaces (13; 14) immediately adjoin one another.

10. Screw-in tool (1) according to Claim 8 or 9, **characterized in that** the diameters of the first conical contact surface (13) and of the second conical contact surface (14) decrease in the screw-in direction of the screw-in tool (1).

11. Tool receptacle (15) for a screw-in tool (1), said tool receptacle (15) containing a receiving opening (16) with an internal thread (17), a first bearing region (19), arranged between a front end side (18) of the tool receptacle (15) and the internal thread (17), and an inner second bearing region (21) following the internal thread (17), **characterized in that** the second bearing region (21) has bearing elements (22) that are spaced apart from one another and protrude radially inwards.

12. Tool receptacle (15) according to Claim 11, **characterized in that** the bearing elements (22) are spaced apart regularly from one another.

13. Tool receptacle (15) according to Claim 11, **characterized in that** the bearing elements (22) are spaced apart irregularly from one another.

14. Tool receptacle (15) according to one of Claims 11 to 13, **characterized in that** the bearing elements (22) are in the form of webs that extend in the axial direction of the tool receptacle (15).

15. Tool receptacle (15) according to one of Claims 11 to 14, **characterized in that** the bearing elements (22) each have a cylinder-segment-shaped bearing surface (23).

16. Tool receptacle (15) according to Claim 15, **characterized in that** the cylinder-segment-shaped bearing surfaces (23) are formed coaxially with a longitudinal axis of the tool receptacle (15).

17. Tool receptacle (15) according to one of Claims 11 to 14, **characterized in that** the bearing elements (22) have a crowned bearing surface (23).

18. Tool receptacle (15) according to one of Claims 11 to 17, **characterized in that** the bearing elements (22) have a centring chamfer (24) on a side facing the internal thread (17).

19. Tool receptacle (15) according to one of Claims 11 to 18, **characterized in that** recesses (25) with external dimensions larger than the bearing elements (22) are arranged in the circumferential direction between the bearing elements (22), and the transitions (26) between the bearing elements (22) and the recesses (25) are rounded.

20. Tool receptacle (15) according to one of Claims 11 to 19, **characterized in that** the first bearing region (19) is formed by two conical bearing surfaces (27; 28) with different cone angles.

21. Tool receptacle (15) according to Claim 20, **characterized in that** the two conical bearing surfaces (27; 28) immediately adjoin one another.

22. Tool receptacle (15) according to Claim 20 or 21, **characterized in that** the diameters of the first conical bearing surface (27) and of the second conical bearing surface (28) decrease in the screw-in direction of the screw-in tool (1).

23. Tool arrangement comprising a tool receptacle (15) and a screw-in tool (1), **characterized in that** the screw-in tool (1) is configured according to one of Claims 1 to 10 and/or the tool receptacle (15) is configured according to one of Claims 11 to 22.

24. Tool arrangement according to Claim 23, **characterized in that** the screw-in tool (1) is configured according to one of Claims 1 to 10 and the tool receptacle (15) is configured according to one of Claims 11 to 22, wherein the spacing of the support elements (8) of the second supporting region (7) of the screw-in tool (1) that are spaced apart from one another in the circumferential direction and protrude radially outwards differs from the spacing of the bearing elements (22) of the second bearing region (21) of the tool receptacle (15) that are spaced apart from one another and protrude radially inwards.

## Revendications

1. Outil de vissage (1), lequel comporte une tête d'outil (2) et une tige d'outil (3) dotée d'un filetage extérieur (4), d'une première région de support (5) disposée entre la tête d'outil (2) et le filetage extérieur (4) et d'une deuxième région de support (7) disposée entre le filetage extérieur (4) et une extrémité libre (6) de la tige d'outil (3), dans lequel la deuxième région de support (7) comprend des éléments de support (8) faisant saillie radialement vers l'extérieur et espacés les uns des autres dans la direction périphérique, **caractérisé en ce que** les éléments de support (8) comprennent respectivement une surface d'appui en forme de partie cylindrique ou une surface d'appui bombée (9).

2. Outil de vissage (1) selon la revendication 1, **caractérisé en ce que** les éléments de support (8) sont espacés les uns des autres de manière uniforme.

3. Outil de vissage (1) selon la revendication 1, **caractérisé en ce que** les éléments de support (8) sont espacés les uns des autres de manière non uniforme.

4. Outil de vissage (1) selon l'une des revendications 1 à 3, **caractérisé en ce que** les éléments de support (8) sont réalisés sous forme d'éléments jointifs s'étendant dans la direction axiale de l'outil de vissage (1).

5. Outil de vissage (1) selon la revendication 1, **caractérisé en ce que** la surface d'appui (9) en forme de partie cylindrique est réalisée de manière coaxiale à un axe longitudinal de l'outil de vissage (1).

6. Outil de vissage (1) selon l'une des revendications précédentes, **caractérisé en ce que** les éléments de support (8) comprennent un biseau d'insertion (10) sur un côté tourné vers l'extrémité libre (6).

7. Outil de vissage (1) selon l'une des revendications précédentes, **caractérisé en ce que** dans la direction périphérique, entre les éléments de support (8), sont disposés des évidements (11) présentant des dimensions extérieures inférieures à celles des éléments de support (8) et des transitions (12) entre les éléments de support (8) et les évidements (11) sont arrondies.

8. Outil de vissage (1) selon l'une des revendications précédentes, **caractérisé en ce que** la première région de support (5) est formée par deux surfaces d'appui (13 ; 14) coniques présentant des angles de cône différents.

9. Outil de vissage (1) selon la revendication 8, **caractérisé en ce que** les deux surfaces d'appui (13 ; 14) coniques sont directement adjacentes l'une à l'autre.

10. Outil de vissage (1) selon la revendication 8 ou 9, **caractérisé en ce que** les diamètres de la première surface d'appui (13) conique et de la deuxième surface d'appui (14) conique diminuent dans la direction de vissage de l'outil de vissage (1).

11. Logement d'outil (15) pour un outil de vissage (1), qui comporte une ouverture de réception (16) dotée d'un filetage intérieur (17), une première région de portée (19) disposée entre un côté frontal avant (18) du logement d'outil (15) et le filetage intérieur (17) et une deuxième région de portée intérieure (21) après le filetage intérieur (17), **caractérisé en ce que** la deuxième région de portée (21) comprend des éléments de portée (22) faisant saillie radialement vers l'intérieur et espacés les uns des autres.

12. Logement d'outil (15) selon la revendication 11, **caractérisé en ce que** les éléments de portée (22) sont espacés les uns des autres de manière uniforme.

13. Logement d'outil (15) selon la revendication 11, **caractérisé en ce que** les éléments de portée (22) sont espacés les uns des autres de manière non uniforme.

14. Logement d'outil (15) selon l'une des revendications 11 à 13, **caractérisé en ce que** les éléments de portée (22) sont réalisés sous forme d'éléments jointifs s'étendant dans la direction axiale du logement d'outil (15) .

15. Logement d'outil (15) selon l'une des revendications 11 à 14, **caractérisé en ce que** les éléments de portée (22) comprennent respectivement une surface de portée (23) en forme de partie cylindrique.

16. Logement d'outil (15) selon la revendication 15, **caractérisé en ce que** les surfaces de portée (23) en forme de partie cylindrique sont réalisées de manière coaxiale à un axe longitudinal du logement d'outil (15).

17. Logement d'outil (15) selon l'une des revendications 11 à 14, **caractérisé en ce que** les éléments de portée (22) comprennent une surface de portée bombée (23).

18. Logement d'outil (15) selon l'une des revendications 11 à 17, **caractérisé en ce que** les éléments de portée (22) comprennent un biseau de centrage (24) sur un côté tourné vers le filetage intérieur (17).

19. Logement d'outil (15) selon l'une des revendications 11 à 18, **caractérisé en ce que** dans la direction périphérique, entre les éléments de portée (22), sont disposées des cavités (25) présentant des dimensions extérieures supérieures à celles des éléments de portée (22) et les transitions (26) entre les éléments de portée (22) et les cavités (25) sont arrondies.

20. Logement d'outil (15) selon l'une des revendications 11 à 19, **caractérisé en ce que** la première région de portée (19) est formée par deux surfaces de portée (27 ; 28) coniques présentant des angles de cône différents.

21. Logement d'outil (15) selon la revendication 20, **caractérisé en ce que** les deux surfaces de portée (27 ; 28) coniques sont directement adjacentes l'une à l'autre.

22. Logement d'outil (15) selon la revendication 20 ou 21, **caractérisé en ce que** les diamètres de la première surface de portée (27) conique et de la deuxième surface de portée (28) conique diminuent dans la direction de vissage de l'outil de vissage (1).

23. Ensemble d'outil comportant un logement d'outil (15) et un outil de vissage (1), **caractérisé en ce que** l'outil de vissage (1) est réalisé selon l'une des revendications 1 à 10 et/ou le logement d'outil (15) est réalisé selon l'une des revendications 11 à 22.

24. Ensemble d'outil selon la revendication 23, **caractérisé en ce que** l'outil de vissage (1) est réalisé selon l'une des revendications 1 à 10 et le logement d'outil (15) est réalisé selon l'une des revendications 11 à 22, l'espacement des éléments de support (8), faisant saillie radialement vers l'extérieur et espacés les uns des autres dans la direction périphérique, de la deuxième région de support (7) de l'outil de vissage (1) étant différent de l'espacement des éléments de portée (22), faisant saillie radialement vers l'intérieur et espacés les uns des autres, de la deuxième région de portée (21) du logement d'outil (15).
